# EUROPEAN PATENT APPLICATION

(11) **EP 2 216 937 A1**
(43) Date of publication of application: **11.08.2010**
(21) Application number: 09305121.7
(22) Date of filing: 10.02.2009
(51) Int. Cl.: H04L 12/24, H04L 12/26

(54) **Alarm notification between customer premises equipment and a remote management server**

(71) Applicant: Alcatel Lucent, 75008 Paris (FR)
(72) Inventor: Cristallo, Geoffrey, 1080, Brussel (BE); Vandaele, Piet, 9040, Sint-Amandsberg (BE)
(74) Representative: BiiP cvba

(57) **Abstract**

A method for alarm notification between a customer premises device (CPE) and a remote management server (ACS) interfacing with each other through a remote management protocol, includes:
- detecting an alarm condition in the customer premises device (CPE);
- transferring an explicit alarm notification from the customer premises device (CPE) to the remote management server (ACS) over the remote management protocol; and
- responding to the explicit alarm notification by the remote management server (ACS) without upfront verification of an alarm criterion in said remote management server (ACS).

## Description

### Field of the Invention

The present invention generally relates to alarm notification between customer premises equipment (CPE) and an auto configuration server (ACS), named remote management server throughout this patent application. Examples of CPE or customer premises devices are a Digital Subscriber Line (DSL) modem, a Set-Top Box (STB), a wireless router such as a WiFi hotspot or a FEMTO cell, a wireless terminal such as a mobile telephone, a Personal Digital Assistant (PDA), etc. The customer premises equipment and the remote management server are supposed to interface with each other through a remote management protocol. Alarms in the context of the present patent application include notifications of for instance critical battery level, security violations such as hacking attempts, etc.

### Background of the Invention

Remote management systems consist of a management platform in the customer device, a remote management server in the network, and a remote management protocol for communication between a management client or agent running on the management platform in the customer device and the remote management server.

An example management platform is the OSGi (Open Service Gateway initiative) service platform, which is a Java-based service platform that runs on top of a Java Virtual Machine (JVM) inside the customer device that is remotely managed. Presence of an OSGi service platform in the customer device enables remote installation and management of software from an auto configuration server anywhere in the network without disrupting the operation of the customer device. This way, installation of a software application, upgrading the software application to a new version, re-configuring the application, adding or activating new features of the application, and removal of the application from the customer device, is made possible without dispatching a technician to the customer premises and without requiring an intervention by the customer. Thanks to the management platform, the software services or applications running on a single customer device can share their capabilities with each other.

The management agent or management client serves as an interface between the bundle or software application and the remote management server, and enables the management platform in the customer device to expose manageable parameters to the remote management server.

The role of the management protocol is to provide a mechanism by which the auto-configuration server can securely read or write parameter values to configure the software in the customer device and eventually monitor the status and statistics of the customer device. An example management protocol for secure remote management of customer devices is the TR-069 protocol defined by the DSL Forum in its Technical Report TR-069, entitled "CPE WAN Management Protocol" that can for instance be retrieved from the Internet via the following URL:
http://dslforum.org/aboutdsl/tr_table.html
The TR-069 protocol is Remote Procedure Call (RPC) based, i.e. a generic message based mechanism by which the auto configuration server is able to read/write/configure parameters and parameter attributes of a software component running on a CPE device. Each parameter consists of a name-value pair. The name identifies the particular parameter and has a hierarchical structure similar to files in a directory, the different levels being separated by a "." (dot). The value of a parameter may be one of several defined data types. Each parameter further may be defined as a read-only or read-write parameter depending on whether the auto configuration server is allowed to only read the parameter or also to change the value of the parameter.

A particular example could be an HyperText Transfer Protocol (HTTP) service or application that is installed on an ADSL or VDSL modem for client-server communications. All parameters of the HTTP application constitute the parameter model of the HTTP application. An example parameter is the number or identification of the port where the HTTP application listens to. The ADSL or VDSL modem is supposed to have an OSGi platform running on top of a Java Virtual Machine. The OSGi platform enables to share the capabilities of the HTTP application with other applications, e.g. a web browser. Via a TR-069 management agent installed on top of the OSGi platform, the parameters of the HTTP application can be made visible and accessible to an auto configuration server (ACS) in the DSL network or any other TR-069 aware bundle.

Although operators request support of alarm management, there is at present no standard way of describing and managing alarms in TR-069. A straightforward way to implement alarm management in TR-069 based remote management systems uses the TR-069 mechanism to notify value changes of parameters in the object model to the ACS.

The notification attribute of a parameter indicates whether the CPE should include changed values of that parameter in the Inform message or Inform Remote Procedure Call (RPC) that is sent to the ACS in a TR-069 session. A distinction is made between "active" and "passive" notification of value changes of a parameter. In case of passive notification, the CPE must include the new value of the parameter in the ParameterList of the Inform RPC that is sent in the next TR-069 session established to the ACS. In case of active notification, the CPE must initiate a TR-069 session to the ACS and include the new value in the ParameterList of the associated Inform RPC.

Let's consider for instance low battery alarm management according to the prior art method. Thereto, it is assumed that the TR-069 data model of a CPE contains a BatteryLevel parameter, indicating the level of the battery of the CPE device. In the TR-069 data model, this parameter may for example be named:
device.*.Battery.{i}.BatteryLevel
Herein, "device" is the root object of the TR-069 tree, "*" is a wildcard for child TR-069 objects, and "{i}" indicates that several Battery objects can exist in the TR-069 data model.

It is further assumed that the initial battery level is 100% and that the CPE device is not connected to a power supply, as a result of which the battery level decreases over time. It is also assumed that the CPE device is able to detect a change of the battery level by increments/decrements of 5%.

The ACS is assumed to configure the "device.*.Battery.{i}.BatteryLevel" parameter with active notification. On the ACS, a local alarm criterion is configured: as soon as the value of the parameter "device.*.Battery.{i}.BatteryLevel" becomes smaller than or equal to 20%, a low battery alarm condition is raised. The ACS may additionally be configured to report the low battery alarm condition to an external system, for example an operator.

In the straightforward approach based on parameter value change reporting, the CPE will use the TR-069 Inform RPC to the ACS for the following values of the battery level: 95%, 90%, 85%, 80%, 75%, 70%, ..., 20%, 15%, ... This means that a significant number of value change Inform messages will be reported by the CPE to the ACS before the ACS detects an alarm condition, unnecessarily occupying resources in the network segment between CPE and ACS, and unnecessarily occupying resources in the ACS to verify the reported value changes against the alarm criterion.

Let's consider a second example wherein the data model of the CPE contains y branches, each branch having i parameters. All parameters in all branches are marked for active notification. Consequently, in the worst case, a value change Inform RPC sent from the CPE to the ACS in the prior art solution will contain the following list of parameters:
device.*.Branch1.A1, value = b1a1
device.*.Branch1.A2, value = b1a2
...
device.*.Branch1.Ai, value = b1ai
device.*.Branch2.A1, value = b2a1
device.*.Branch2.A2, value = b2a2
...
device.*.Branch2.Ai, value = b2ai
...
device.*.Branchy.A1, value = bya1
device.*.Branchy.A2, value=bya2
...
device.*.Branchy.Ai, value=byai

When such a value change Inform RPC would be received, the ACS would have to compare each new parameter value in the Inform RPC with the local alarm criteria and verify if at least one of the conditions for raising an alarm is met. This would represent a substantial load on the ACS, in particular if the amount of branches is supposed to be high, e.g. y=10, and the number of parameters per branch is supposed to be high, e.g. i=100.

Summarizing, a drawback of using the TR-069 value change notification mechanism for alarm notification is its scalability and inherent load imposed on the ACS. Indeed, for each Inform message reporting changed parameter values to the ACS, the ACS has to determine if an alarm condition is met. In order to do so, the ACS must evaluate local alarm criteria, like for instance comparing the new parameter value with a threshold. Depending on the number of such local alarm criteria, the ACS may spend a significant amount of its time and resources to the processing of the reported parameter value changes.

Another drawback of the straightforward alarm management approach based on the TR-069 Inform messages is the difficulty to achieve "real-time" alarm notification. In particular for critical alarm conditions like security attacks or low battery status, operators are requesting the support of real-time alarm notification on TR-069 platforms. In TR-069 however, only one Inform message can be sent per TR-069 session. This implies that when an alarm condition is detected within an existing TR-069 session, the CPE will not be able to report the parameter value change and the ACS will not be able to gain knowledge on the alarm condition until the current TR-069 session ends, a new TR-069 session is opened, and the parameter value change is transferred and processed. In case the TR-069 session is TCP based, the TCP connection must be closed when the TR-069 session is terminated. As a consequence, two times the maximum segment lifetime (MSL) will pass before a new TCP connection can be opened, and the total duration for reporting the alarming parameter value change may amount up to several minutes, which is unacceptable to operators. Operators desire critical alarms to be reported to the ACS in real-time, i.e. within 30 seconds, or within 60 seconds.

It is an object of the present invention to provide a method, CPE and ACS that enable alarm notification in a remote management system, but which overcome the above described drawbacks and shortcomings of the straightforward parameter value change notification based mechanism. In particular, it is an objective to provide a remote management system supporting alarm management with reduced load on the ACS. It is a further objective to provide a remote management system enabling real-time alarm management.

### Summary of the Invention

According to the present invention, the above defined objectives are realized by the method for alarm notification between a customer premises device (CPE) and a remote management server (ACS) interfacing with each other through a remote management protocol, as defined by claim 1, the method comprising the steps of:
- detecting an alarm condition in the customer premises device (CPE);
- transferring an explicit alarm notification from the customer premises device (CPE) to the remote management server (ACS) over the remote management protocol; and
- responding to the explicit alarm notification by the remote management server (ACS) without upfront verification of an alarm criterion in said remote management server (ACS).

Indeed, instead of using the parameter value change notification, CPE devices that are capable to detect whether an alarm criterion is matched, can send an explicit alarm notification to the ACS. Such explicit alarm notification may for instance be a new "alarm" event in the TR-069 Inform RPC, or may be a new "Alarm" RPC. The invention simplifies the operations performed by the ACS to determine whether an alarm condition is met since no comparison of new parameter values to threshold levels or other processing is needed at the ACS upon receipt of the alarm notification. The invention also reduces the load on the interface between the CPE and the ACS because not every parameter value change has to be reported to the ACS. In summary, the invention adds to the scalability of alarm management in remote management systems.

In case where the explicit alarm notification is implemented through a dedicated Alarm RPC or dedicated Alarm command, such RPC can be sent any time during an existing TR-069 session, helping to meet the real-time requirement of operators. In case where the explicit alarm notification is implemented through a new alarm event in the TR-069 Inform RPC, the invention may be complemented with the technique described in European Patent Application No. 08290333.7 entitled "Methods for Automatically Configuring Devices in Telecommunication Networks and Devices for Use with Such Methods". Therein, it is proposed to extend/modify the TR-069 protocol such that multiple Inform RPCs can be sent within a single TR-069 session. This way, the real-time constraint could be met as well.

It is noticed that the present invention further relates to a remote management server (ACS) as defined by claim 6 and a customer premises device (CPE) as defined by claim 7, both adapted for use in the method according to the invention.

Optionally, as defined by claim 2, the remote management protocol in the method according to the present invention is the TR-069 CPE WAN Management Protocol.

As mentioned already in the introductory part of this patent application, the DSL Forum has defined in its Technical Report TR-069 a protocol for remote management, i.e. a way of naming parameters in a hierarchically structured way, and a way of securely reading/writing these parameters from a remote location in the network through a sequence of messages, the so called Remote Procedure Calls (RPCs). Obviously, the support of a scalable alarm management mechanism through detection of alarm conditions in the CPE and explicit alarm notification to the ACS or remote management server is not limited to a particular existing or future remote management protocol. Variant management protocols whose current or future versions may be used in conjunction with the current invention are for instance the OMA-DM Open Mobile Alliance Device Management protocol for mobile customer devices or SNMP (Simple Network Management Protocol).

Further optionally, the explicit alarm notification in the method according to the present invention may consist of a dedicated Alarm Remote Procedure Call, as defined by claim 3.

Indeed, a new, dedicated message or RPC containing only those parameters for which the CPE has detected an alarm condition, i.e. only a subset of the parameters whose value has changed, may serve as an explicit alarm notification. Such new, dedicated Alarm RPC may become standardized, e.g. in future versions of the TR-069 Specification, or alternatively a proprietary Alarm RPC may be used. Such proprietary RPC however will be unknown to an ACS from a different vendor and cannot be interpreted thereby.

Alternatively, as indicated by claim 4, the explicit alarm notification in the method according o the present invention may consist of an Alarm event contained in a TR-069 Inform Remote Procedure Call.

Thus, instead of a new dedicated RPC, a TR-069 Inform RPC with new Alarm event may serve as explicit alarm notification in a variant implementation of the present invention. Thereto, an "Alarm" object and corresponding placeholder would be created in the object model in the CPE. This placeholder would contain for instance a list of Boolean parameters, e.g. "LowBatteryAlarmRaised" indicating whether an alarm condition is detected (bit set one) or not detected (bit set zero) for a particular parameter that is monitored by the CPE. In this case, the ACS would only have to search those parameters in the list for which the "AlarmRaised" bit is set and does not need to evaluate any local alarm criterion. This implementation of the invention is advantageous in that it is compliant with the current TR-069 standard and does not require any new RPC to be standardized or proprietary implemented. The existing "Inform" RPC is used.

A further optional, advantageous aspect of the method according to the present invention is that it may comprise prioritizing the transferring of and responding to said dedicated Alarm Remote Procedure Call over other TR-069 Remote Procedure Calls. This optional aspect is defined by claim 5.

In case where a new, dedicated Alarm command or RPC is used to implement the explicit alarm notification, this RPC can be prioritized over other commands or RPCs in order to help meet the real-time requirement from operators for critical alarm handling. This may for instance be valuable in case of congestion at the ACS in which case the ACS may prioritize Alarm RPCs over other RPCs. Another example where this may be valuable is in case of congestion in the network between CPE and ACS. The transport nodes in this network segment may be configured to prioritize the Alarm RPC and handle other RPCs with a lower priority.

### Brief Description of the Drawings

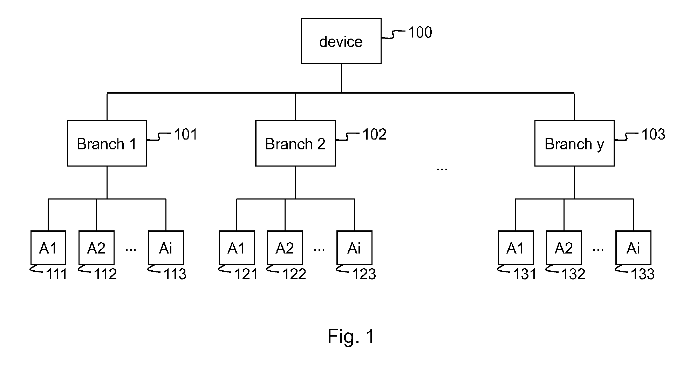

Fig. 1 illustrates a data model in a CPE device that supports explicit alarm notification according to an embodiment of the present invention.

### Detailed Description of Embodiment(s)

In a first illustrative embodiment, the example of low battery alarm management is again considered. Thereto, it is again assumed that the TR-069 data model of a CPE contains a BatteryLevel parameter, indicating the level of the battery of the CPE device. In the TR-069 data model, this parameter may for example be named:
device.*.Battery.{i}.BatteryLevel
   Herein, "device" is the root object of the TR-069 tree, "*" is a wildcard for child TR-069 objects, and "{i}" indicates that several Battery objects can exist in the TR-069 data model.

It is further again assumed that the initial battery level is 100% and that the CPE device is not connected to a power supply, as a result of which the battery level decreases over time. It is also assumed that the CPE device is able to detect a change of the battery level by increments/decrements of 5%.

According to the present invention, the Battery object will contain a parameter "device.*.Battery.{i}.AlarmRaised" in addition to the "device.*.Battery.{i}.BatteryLevel" parameter. This parameter "device.*.Battery.{i}.AlarmRaised" is for instance a Boolean parameter whose value is set 1 (one or "true") when the CPE detects that the battery level becomes smaller than or equal to 20 %, and whose value is set 0 (zero or "false") as long as the battery level stays above 20%. The "device.*.Battery.{i}.BatteryLevel" parameter is no longer marked for active notification. Instead, the "device.*.Battery.{i}.AlarmRaised" is marked for active notification by the ACS.

The CPE is supposed to be able to detect the low battery condition. When the battery level becomes smaller than or equal to 20%, the CPE sets the "device.*.Battery.{i}.AlarmRaised" parameter "true" and sends an explicit alarm notification to the ACS. In a first implementation, the CPE sends an Inform RPC containing the "alarm" event. This Inform RPC may be an additional Inform RPC within the existing TR-069 session, or it may be the Inform RPC of the next TR-069 session in case only one Inform RPC can be sent per TR-069 session. In a second implementation, the CPE sends a dedicated "Alarm" RPC to the ACS. In both implementations, the ACS receives a single explicit alarm notification and no longer has to verify reported parameter values against locally implemented alarm criteria.

Fig. 1 shows the data model of the CPE in a second embodiment of the present invention. All parameters in Branch 1 or 101, i.e. 111, 112 ... 113, indicate an alarm and it is assumed that the amount of parameters in this branch is large, for instance i=100. Local alarm criteria are defined on the ACS, not shown in Fig. 1. Examples of such criteria are:
if "device.*.Branch1.A1" is present in the value change Inform RPC, then an "Alarm A1" is raised;
if "device.*.Branch1.A2" is present in the value change Inform RPC and the new value of this parameter is smaller than x %, then an "Alarm A2" is raised;
if "device.*.Branch1.Ai" is present in the value change Inform RPC, then an "Alarm Ai" is raised.

Several branches exist: Branch 1 or 101, Branch 2 or 102, ..." Branch y or 103. It is assumed that y is large, e.g. y = 10.

According to the present invention, the CPE whose data model is drawn in Fig. 1 shall report to the ACS a dedicated "Alarm" RPC containing only those parameters for which the CPE has detected an alarm, i.e. a subset of the parameters in the respective branches Branch 1 ... Branch y - a subset since not all parameters indicate an alarm, even if their value has changed. In a variant implementation, the CPE illustrated by Fig. 1 will send an Inform RPC containing an "Alarm" event. The ACS would then only need to search in the list those parameters for which the "AlarmRaised" bit is set and does not need to evaluate any local alarm criterion.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for alarm notification between a customer premises device (CPE) and a remote management server (ACS) interfacing with each other through a remote management protocol,
**CHARACTERIZED IN THAT** said method comprises the steps of:
- detecting an alarm condition in said customer premises device (CPE);
- transferring an explicit alarm notification from said customer premises device (CPE) to said remote management server (ACS) over said remote management protocol; and
- responding to said explicit alarm notification by said remote management server (ACS) without upfront verification of an alarm criterion in said remote management server (ACS).

2. A method according to claim 1,
**CHARACTERIZED IN THAT** said remote management protocol is the TR-069 CPE WAN Management Protocol.

3. A method according to claim 2,
**CHARACTERIZED IN THAT** said explicit alarm notification consists of a dedicated Alarm Remote Procedure Call.

4. A method according to claim 2,
**CHARACTERIZED IN THAT** said explicit alarm notification consists of an Alarm event contained in a TR-069 Inform Remote Procedure Call.

5. A method according to claim 3,
**CHARACTERIZED IN THAT** said method further comprises prioritizing the transferring of and responding to said dedicated Alarm Remote Procedure Call over other TR-069 Remote Procedure Calls.

6. A remote management server (ACS) adapted for use in the method according to claim 1.

7. A customer premises device (CPE) adapted for use in the method according to claim 1.
